# EUROPEAN PATENT SPECIFICATION

(11) **EP 4 523 083 B1**
(45) Date of publication and mention of the grant of the patent: **08.04.2026**
(21) Application number: 23739138.8
(22) Date of filing: 28.06.2023
(51) Int. Cl.: G06F 11/362, G06F 8/656, G06F 11/30, G06F 8/658

(54) **SYSTEM AND COMPUTER-IMPLEMENTED METHOD FOR UPGRADING AND/OR UPDATING AT LEAST ONE SERVICE OF A PLURALITY OF SERVICES**
SYSTEM UND COMPUTERIMPLEMENTIERTES VERFAHREN ZUR ERWEITERUNG UND/ODER AKTUALISIERUNG MINDESTENS EINES DIENSTES AUS EINER VIELZAHL VON DIENSTEN
SYSTÈME ET PROCÉDÉ MIS EN UVRE PAR ORDINATEUR POUR LA MISE À NIVEAU ET/OU LA MISE À JOUR D'AU MOINS UN SERVICE D'UNE PLURALITÉ DE SERVICES

(30) Priority: 07.07.2022 EP 22183572
(43) Date of publication of application: 19.03.2025
(73) Proprietor: Siemens Aktiengesellschaft, 80333 München (DE)
(72) Inventor: KLEPKE, Steffen, 81739 München (DE); LANG, Bernhard, 81739 München (DE); MAIER, Rupert, 91330 Eggolsheim (DE); STÜCKJÜRGEN, Christoph, 80807 München (DE)
(74) Representative: Siemens Patent Attorneys
(86) International application number: PCT/EP2023/067606
(87) International publication number: WO 2024/008528

(56) References cited:
- US-A1- 2020 329 108
- KOZIOLEK HEIKO ET AL: "Dynamic Updates of Virtual PLCs Deployed as Kubernetes Microservices", 26 August 2021, 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 3 - 19, pages: 3 - 19, XP047606262
- HE XIANG ET AL: "Optimal Evolution Planning and Execution for Multi-version Coexisting Microservice Systems", 9 December 2020, 16TH EUROPEAN CONFERENCE - COMPUTER VISION - ECCV 2020, PAGE(S) 3 - 18, XP047585932

## Description

The present invention relates to a system and to a computer-implemented method for upgrading and/or updating at least one service of a plurality of services.

### BACKGROUND OF THE INVENTION

In software development there is a trend to update and upgrade smaller parts of the system, that provide services in shorter cycles, more frequently.

A plurality of such services implements a joint (technical) application to run a specific technical solution.

For instance a joint application can be used to read data from one or more sensors and/or to control/steer one or more actuators in a technical system. A technical system can be a manufacturing/automation or an energy system or another technical apparatus.

A single software application can be composed of many loosely coupled and independently deployable smaller services (so-called micro services).

To the degree that a system consists of more and more separately update-/upgradeable parts the number of upgrades increases.

For each update/upgrade, it has to be verified whether it can be used productively in the field (deployed for production use). The following issues are relevant:
It is difficult to determine whether a newly developed version of a service (update/upgrade) is good enough to be accepted or is better than the current service and should be used instead of the already implemented service. The problem is that laboratory tests may not be able to be executed sufficiently close to real world operating conditions or not for long enough to gain the confidence required.

From KOZIOLEK HEIKO ET AL: "Dynamic Updates of Virtual PLCs Deployed as Kubernetes Microservices", 26 August 2021 (2021-08-26), 16TH EUROPEAN CONFERENCE - COMPUTER VISION - ECCV 2020, CORNELL UNIVERSITY LIBRARY, 201 OLINE LIBRARY CORNELL UNIVERSITY ITHACA, NY 14853, PAGE(S) 3 - 19, pages 3-19, is known that each service is stopped and migrated together with its state to an updated service instance.

It is not acceptable or too expensive that critical systems are taken out of operation too often or for too long time periods.

For systems that need to operate safely, any change in the system needs to be validated in the field to ensure safe operation in its intended environment.

After performing an upgrade/update, unforeseen problems might occur in the field and then a reversion to the pre-upgrade state (roll back) is desirable. However, in many cases this may not be possible to achieve in a fast and non-complex manner or additional downtime of the system may be involved. It is possible to use container orchestration frameworks like Kubernetes which support so-called "Rolling Updates" targeting zero service downtime.

For zero downtime updates of software in a system involving physical actuators and combining this approach with container orchestration frameworks a method of "seamless and safe upgrade of SW intensive systems during operation disclosed in EP 3 502 875 A1 can be used.

These kinds of approaches work well in an automation process, where automation is realized in a single "monolithic micro service". That means if there are more than one micro service that implement a joint solution e.g. in an automation environment it depends on how the functionalities (implemented in the micro services) are used. If the functionalities are used in several independent standalone processes (ideal micro service architecture) each of the services can be updated e.g. one of the above mentioned methods.

In case several micro services handle a joint process, it depends on the process implementation. The following requirements for updating/upgrading a micro service shall be fulfilled:
- The update should be performed as soon as possible.
- It is not ensured, that there are timeslots where all involved micros services have the process state "idle" at the same time.
- It should be ensured that each part is produced on base of the previous/current or the update/new software version, but not of a mixture of previous and update versions. There is no knowledge available about when and in which order the micro services should be updated.
- It would not work, to update each of the micro services as soon as they are "idle".

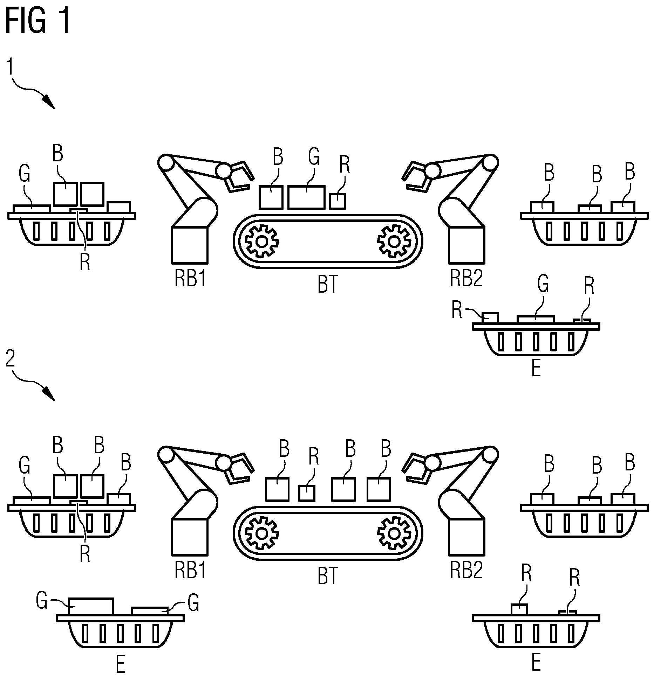

Figure 1 shows a constellation as an example where Software-updates can generate errors.

Marked with reference sign "1" an initial automation process is shown where a robot RB1 as an actuator collect work pieces in green G, in blue B an in red R from a basket IN and place them piece by piece on a belt BT. A robot RB2 as an actuator pick the work pieces from the belt and sort them out into a basket OUT containing the blue work pieces and into a basket E containing the red and green work pieces as exceptions.

Marked with reference sign "2" an updated automation process is shown.

In the previous software version of a micro service which is configured to control robot RB2 which handles all kinds of work pieces. In the new/updated software version only green work pieces are separated by robot RB1. Separated work pieces are not forwarded to robot RB2.

According to the initial automation process robot RB1 ran till its "update time slot" with the previous software version. Because of this it puts also green work pieces on the belt. Robot RB2 is at this time in the process state "idle" (nothing to do) and is also updated with the new software version.

The following errors occur:
- The handling of the work pieces on the belt started with the previous process and ends up with the new/updated process (mixture of processes).
- The updated software version for robot RB2 does not hold any handling for the green work pieces (is now handled by robot RB1). So green work pieces remain on the belt, because robot RB2 cannot handle the before its update.
- There was no joint time slot available. The micro service for the belt BT can earliest be updated when the micro service is "idle" (e.g. belt is empty).

The order of the usage of the different services are mostly not transparent nor easy to handle. Because of this, usually the complete system is shut down to perform any updates.

### SUMMARY OF THE INVENTION

It is therefore the object of the present invention to provide an improved system and/or an improved method for upgrading and/or updating at least one (micro)service of a plurality of services.

The above-mentioned object is achieved by a method and one or more apparatus and/or a system and/or a device according to the features of the independent claims.

Preferred embodiments of the invention are described in the dependent claims. Any combination of the features of the dependent claims to each other and with the features of the independent claims is possible.

The invention claims a computer-implemented method for upgrading and/or updating at least one service of a plurality of services performed on a computer-implemented system, wherein the plurality of services implements a joint technical application in said system,
wherein the computer-implemented method is configured to:
a. deploy at least one update version of the at least one service which needs to be updated or be upgraded on the system while maintaining the current version of the service on the system, wherein the update version of the at least one service is prevented from controlling specific parts of the joint technical application;
b. deploy and operate a monitoring module for protocolling communications among the plurality of services and for analysing dependencies among applications of said services with respect to their running times wherein such dependencies are derived from data resulting from the protocolled communications, wherein the protocolled communications contain the time when the services communicates to other components of the system and wherein dependencies among all applications of the services result in chronologically ordered sequences of service activities sorted by the protocolled time, whereby the services activities are separated from each other by one or more sequences of inactivities of all services;
c. determine, by machine learning, process states of each at least one service which are suitable for updating and/or upgrading said service by complying with criteria inferred from said dependencies to identify suitable time slots for updating and/or upgrading the at least one service, wherein a suitable time slot means that all services are inactive at the same time, whereby training data for the machine learning can be split into training data set to build a neural network for the machine learning and labelled for dividing them into a first data set representing process states of the services suitable for updating and/or upgrading and into a second data set representing process states of the services not suitable for updating and/or upgrading and into validation data set to verify output data of the build neural network model when the machine learning is applied in parallel to the application of the services;
d. disable the control of the current version of the service within the current technical application at a time slot of said identified time slots; and
e. enable the control of the deployed update version of the service within the current technical application.

A typical industrial plant is a complex technical system, comprising of a wide range of various interconnected components, such as controllers, IO systems, industrial communication modules, energy distribution devices, etc. Each component possesses a variety of different features required for the operation of the respective system and fulfillment of the required functionalities.

A computer-implemented system can be a technical system or a digital twin and any combination of them.

A joint technical application can - for instance - read sensors' data and/or control actuators in a technical process e.g. to run specific product and/or transport processes.

Updating and/or upgrading the at least one service is continuously performed, preferably on the fly (see below).

Enabling the control of the deployed update version which represents the updated and/or upgraded version of the service, within the current technical application usually leads to modifications of the joint application and/or to implement another technical application (e.g. modified/improved control of an actuator).

The protocolled communication can be recorded as time series data for all services during a pre-definable or pre-defined time period.

Data concerning said communications can be captured from a specific input and/or output service (preferably implemented as a sidecar) managing communications among said services that implement the said joint technical application.

The criteria could be: if a first service activity of the plurality of services starts after and/or a last service the plurality of services starts before a suitable time slots in which the process states of all of the services are suitable for updating and/or upgrading then the criteria are complied.

Dependencies among all applications of the services can result in sequences of service activities and sequences of service inactivities whereby each sequence of service activities chronologically sorts its service activities. The sequences can be built by using the recorded time series data. The resulted chronological order of the service activities should comply with the criteria. The sequences can be separated from each other by one or more sequences of inactivities of all services.

If all variants of such separated sequences during the pre-definable time period are used as training data for the machine learning then such training data can be labelled for dividing them into the first data set and into the second data set. For instance time intervals (gaps) of inactivity of all services are suitable for updating/upgrading. When a service is inactive/having no activities, the process state of the service is "inactive" and/or "idle".

The invention and its embodiments provide the following benefits:
- The invention works in dynamic systems, where the dependencies between the different services is changing and/or non-transparent.
- It secures automated software updates on the fly (zero down time) as soon as possible and in the right time and/or order.
- It reduces costs of system downtime
- It secures, that each single "process run" is terminated on base of the same "process implementation" in that it was started (no mix between old and updated process behavior) (e.g. example in figure 1).
- Additionally, the derived knowledge can be used to identify better service cuts (with reduced dependencies between each them). It can be used as a tool for continuous improvement of the underlying software architecture and implemented structure of the micro services.

The invention further claims a system for upgrading and/or updating at least one service of a plurality of services performed on the system, wherein the plurality of services implements a joint technical application and each service is configured to control a specific part of the joint technical application, whereby the system is coupled to and/or comprises one or more processors which is or are configured to:
a. deploy at least one update version of the at least one service which needs to be updated or be upgraded on the system while maintaining the current version of the service on the system, wherein the update version of the at least one service is prevented from controlling specific parts of the joint technical application;
b. deploy and operate a monitoring module for protocolling communications among the plurality of services and for analysing dependencies among applications of said services with respect to their running times wherein such dependencies are derived from data resulting from the protocolled communications, wherein the protocolled communications contain the time when the services communicates to other components of the system and wherein dependencies among all applications of the services result in chronologically ordered sequences of service activities sorted by the protocolled time, whereby the services activities are separated from each other by one or more sequences of inactivities of all services;
c. determine, by machine learning, process states of each at least one service which are suitable for updating and/or upgrading said service by complying with criteria inferred from said dependencies to identify suitable time slots for updating and/or upgrading the at least one service (on the fly), wherein a suitable time slot means that all services are inactive at the same time, whereby training data for the machine learning can be split into training data set to build a neural network for the machine learning and labelled for dividing them into a first data set representing process states of the services suitable for updating and/or upgrading and into a second data set representing process states of the services not suitable for updating and/or upgrading and into validation data set to verify output data of the build neural network model when the machine learning is applied in parallel to the application of the services;
d. disable the control of the current version of the service within the current technical application at a time slot of said identified time slots; and
e. enable the control of the deployed update version of the service within the current technical application.

Under update version can be also understood an upgrade version.

The one or more processors can be distributed organized on servers or in a cloud.

Embodiments as described above for the method can be analogous applied for the system, device and for computer program (product) and for the computer-readable storage medium.

This system and the device can be implemented by hardware, firmware and/or software or a combination of them.

The computer-readable storage medium stores instructions executable by one or more processors of a computer, wherein execution of the instructions causes the computer system to perform the method.

The computer program (product) is executed by one or more processors of a computer and performs the method.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following figures:
- Figure 1: illustrates the state of the art described above;
- figure 2, 3 and 4:: each figure shows an example for relationships between the micro services in different process situations; and
- figure 5: depicts different components and/or modules building a service architecture and their dependencies.

In the context of the invention the following definitions are given:
Update:
   A software update stands for a new version of the software and is usually denoted by a change in version number. They normally ensure that security gaps in programs and/or functionality bugs are closed/fixed.
Upgrade:
   A software upgrade can better be described as a new variant that is based on the original variant and includes a technical innovation/improvement.
PLC:
   A Programmable Logic Controller (PLC) is an industrial computer control system that continuously monitors the state of input devices and makes decisions based upon a custom program to control the state of output devices.
OPC UA:
   In the industrial environment there is a communication standard called OPC Unified Architecture (OPC UA). OPC UA is a cross-platform, open-source, IEC62541 standard for data exchange from sensors to cloud applications developed by the OPC Foundation.
"On the fly":
   This concept used to describe something that is being changed while the process that the change affects is ongoing. Switching computer parts or changing a software program on the fly means computer/software parts are replaced/changed while the computer/software program is still running.
Process states:
   In a multitasking computer(-implemented) system, processes may occupy a variety of states. A typical process state is "active", "inactive/non-active", "idle" or "waiting", etc.
Digital twin:
   A digital twin is a virtual representation that serves as the real-time digital counterpart of a physical object or process. Product drawings and engineering specifications progressed from handmade drafting to computer aided design to model-based systems engineering. In the context of manufacturing the physical manufacturing objects are virtualized and represented as digital twin models (avatars) seamlessly and closely integrated in both the physical and cyber spaces. Physical objects and twin models interact in a mutually beneficial manner.
Micro services:
   An approach in which a single application is composed of many loosely coupled and independently deployable smaller services.
Kubernetes:
   Orchestration framework for container-based applications in a computer cluster taking care of application deployment, scaling, and management.
Container:
   Containers are a standardized unit of software that allows developers to isolate their app from its environment. A container runs on a shared OS and encapsulates all resources like libraries needed for a particular application process. A process running in a container has only access to devices assigned to the container (like a virtual machine).
Micro service architecture:
   An architectural design for building a distributed application using containers. They get their name because each function of the application operates as an independent service. Micro service architectures usually treat each function of an application as an independent service that can be altered, scaled, updated or taken down without affecting the rest of the application. Any business can benefit from the use of a micro service architecture if they have applications that need frequent updates, experience dynamic traffic patterns, or require near real-time communication.
Kubernetes-Pod:
   Pods are the smallest deployable units of computing that you can create and manage in Kubernetes. A Pod is a group of one or more containers, with shared storage and network resources, and a specification for how to run the containers. A Pod's contents are always co-located and co-scheduled and run in a shared context. A Pod models an application-specific "logical host": it contains one or more application containers which are relatively tightly coupled. In non-cloud contexts, applications executed on the same physical or virtual machine are analogous to cloud applications executed on the same logical host.
Service mesh:
   A service mesh is an abstraction layer on top of a micro services application that provides the following capabilities:
   - Service-to-service communication (including service discovery and encryption)
   - Observability (monitoring and tracing)
   - Resiliency (circuit breaking and retries)
   - Traffic management (routing, load balancing)
   - Security (authorization, encryption)
Service mesh-sidecar:
   A service mesh solves some of the challenges introduced by distributed micro services by abstracting necessary functions (service discovery, connection encryption, error and failure handling, and latency detection and response) to a separate entity called proxy.
   The proxy (also called sidecar) sits in front of each micro service, and all inbound and outbound communications flow through it. The proxy provides the functions noted above and metrics for observability purposes.
Service mesh - control plane:
   Service instances, sidecars and their interactions make up what is called the data plane in a service mesh. A different layer called the control plane manages tasks such as creating instances, monitoring and implementing policies for network management and security. Control planes can connect to a CLI or a GUI interface for application management.

In this examples the term "update" is used for both terms "update" and/or "upgrade". In the below explained automation process micro services are used for the services mentioned above.

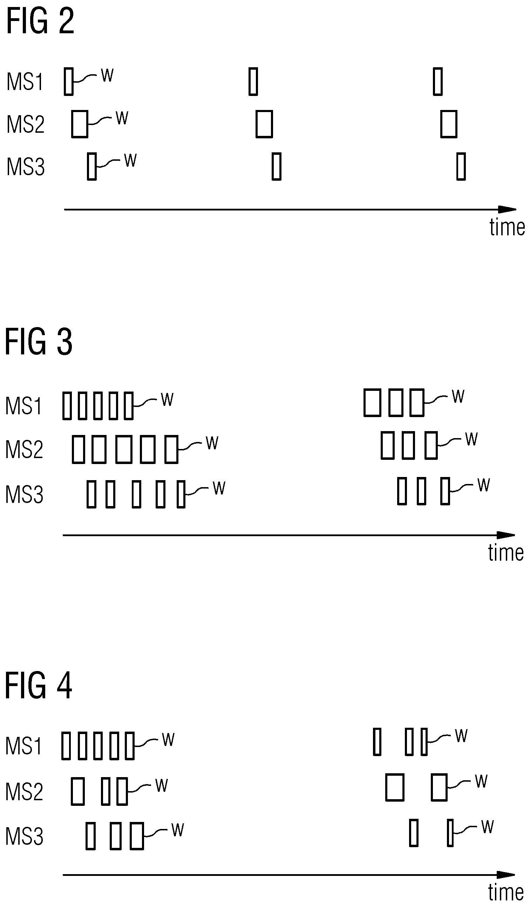

Referring to the initial automation/production process 1 in figure 1 there is one-to-one sequence of micro services e.g. a micro service MS1 for robot RB1, a micro service MS2 for the belt BT and a micro service MS3 for robot RB2. In a sequential production process - as shown in figure 2 - MS1 starts (robot RB 1 put one work piece w onto the belt BT) and after the transport (MS2) of the work piece w onto the belt into the direction of robot RB2, micro service MS 3 starts (RB2 picks the work piece w from the belt). In a parallel production process - as shown in figure 3 - MS1 starts with activities "placing more than one work piece on the belt". Work pieces are transported (MS2) to RB2. Robot RB2 picks (MS3) all the works pieces on the belt.

The following knowledge can be derived:
- Identified micro services: MS1 (robot RB1), MS2 (belt BT), MS3 (robot RB2)
- Activities are started by MS1
- Sequential processes and/or parallel processes
- Used in an "one to one" sequence: MS1 - MS2 - MS3
- Maximum of time delay between the micro services (MS1 to MS2 and MS2 to MS3)
- Minimum/maximum of time required after the process is started
- Maybe process terminated by MS3

Figure 4 shows a parallel production process which uses no one-to-one sequence.

The following knowledge can be derived:
- Identified micro services: MS1 (robot RB1), MS2 (belt BT), MS3 (robot RB2)
- Activities are started by MS1
- Overlapping processes
- No "One to One" sequence: MS1 - MS2 - MS3
- Maximum of time delay between the Micro services (MS1 to MS2 and MS2 to MS3)
- Minimum/maximum of time required till process will have been finished after MS1 will be finished.
- Process terminated by MS3 or seldom by MS1
- Same count of start stops within each MS2 and MS3

Using the derived knowledge and the current "process status" the invention calculates best fitting "Update Orders" and suitable "Update Time Slots" for each individual micro service.

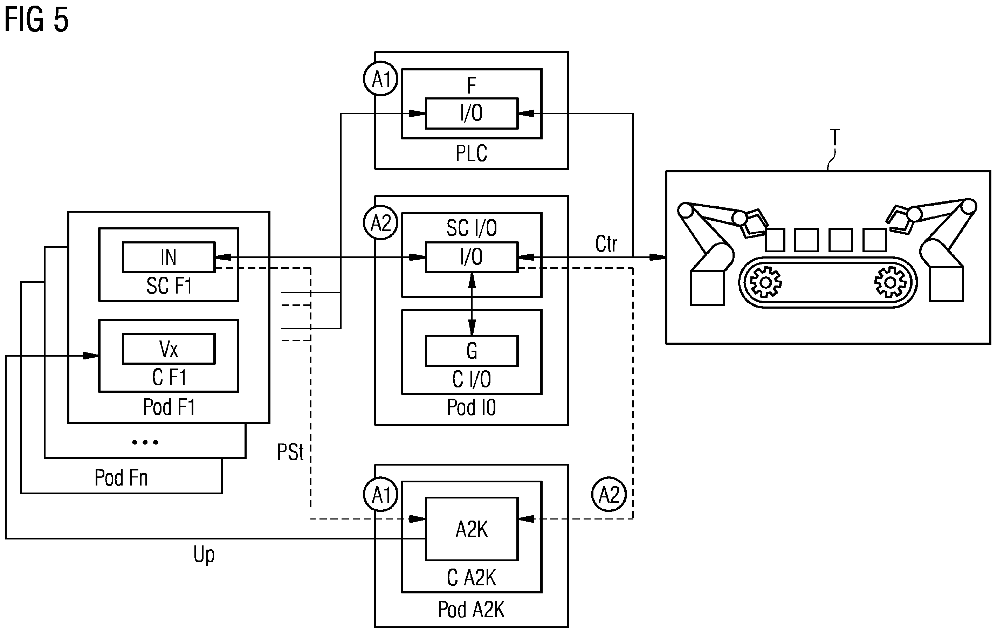

Figure 5 shows different components and/or modules and their dependencies.

The architecture of these components build a service architecture. In particular micro services are used. The micro services are encapsulated in containers C I/O, C A2K, C F1,..., CFn and these containers are embedded in Kubernetes Pods P IO, P A2K, Pod F1,... Pod F2 and can get information via an gateway G. The architecture also uses sidecars SC F1, SC F2, SC Fn and SC I/O implemented on base of service mesh. Sidecars are able to get, forward and manipulate outbound and/or inbound communications IN. Information about the timing and dependencies of activities performed from the different micro services lead to allow the update/upgrade of micro service software on the fly.

The invention supports two different alternatives A1 and A2 to implement an interface to a technical system T to be controlled. The technical system may comprise the automation process with the robots as actuators, belt and work pieces mentioned above.

### Alternative A1:

Access to the actors and sensors of the technical system via I/O (I/O = process inputs and outputs) to control the process specific hardware e.g. robots, belt is implemented via conventional Programmable Logic Controller PLC (especially without usage the of micro services).

### Alternative A2:

The management of the process image to control - see Ctr in figure 5 - the process specific hardware e.g. robots, belt is implemented via micro services.

Usually, micro service architectures are designed in a way, that different micro services can be updated and/or upgraded independently from each other. Each of the micro services can be updated and/or upgraded without any knowledge about the overall process dependencies with respect to the example according to figure 1.

In the following a system implemented by micro services e.g. according to figure 4 the knowledge about a joint technical application e.g. controlling an actuator in an automation process, is derived from each alternative of the I/O.

One of the main challenges in an automation system is to reach flexible and efficient production processes (e. g. lot size one and zero down time in production). This requires an automated approach to update and/or upgrade the services in automation solutions on the fly.

In the shown architecture there is a monitoring module A2K, called "Activities to Knowledge". This module enables monitoring and analysis of dependencies in the usage/application of the available micro services. According to the above described alternatives there are different possibilities to capture the required data:
Alternative A1 is an interface to the hardware by the mentioned PLC steering/controlling different functions F. In this case the required data is derived from all different function micro services F1,...,Fn via related sidecars e.g. shown SC F1 and hidden SC F2,...,SC Fn.

Alternative A2 is an interface to the hardware by "IO Micro service" I/O.

The required data can be derived by monitoring the input and/or output communication happening at the "IO micro service" via related sidecar SC I/O. (Exception: There is a direct communication between micro services (without using the "IO micro service")).

Module A2K analyses:
when the process states (see reference sign PSt) of different micro services is active. This means when they communicate with other components of the system.

How the different activities and micro services relate to each other (which micro service initiates activities for which micro service).

How is the timing (how long last the different activities: minimum, maximum, in average).

Based on the determined /calculated time slots suitable for update/upgrade and update/upgrade orders the module A2K initiates updates (see reference sign Up) for each of the involved micro service (initiates the switching between the current version Vx and an update version). Updates can be triggered by using the API (Application Programming Interface) of the container orchestration framework, e. g. Kubernetes, but also via service mesh.

The A2K component can be implemented in different ways:
i. As an algorithm which detects process states suitable for upgrades based on a fixed rule set
ii. Using artificial intelligence:
   ∘ Supervised learning with training data to distinguish between process states suitable for upgrades and process states not suitable for upgrades
   ∘ Unsupervised learning for clustering: Separate "activity" (active) clusters from "idle" (non-active) clusters; trigger upgrades only during "idle" cluster

Based on the calculated "Update orders" and "Update Time Slot" the "A2K" initiates updates for each of the involved micro service (controls switching between versions). Updates can be triggered by using the API of the container orchestration framework, e. g. Kubernetes, but also via service mesh.

The following suitable AI methods can be applied for the continuous update of micro services, which are working together in a priori unknown way.

The following steps are described in the following which provide an analysis to the above-mentioned points a., b., c.
1. Identification of collaboration mode of micro services based on time series analysis.
2. Identification of gaps (time slots) during full operation of the automation process so that an update of micro services could be carried out.
3. Recommendation to update the micro services as soon as the update is requested and a suitable series of time slots for such updates are forecasted.

The following methods concerning above mentioned steps 1. and 2. can be used for the afore mentioned algorithm i. and the unsupervised and supervised machine learning ii.

Ad 1: Labelled time series data for all micro services of the automation process are recorded. Such recording could be done by the above-mentioned monitoring module. The labels are active or non-active for the time stamps of all micro services. A qualified time period TP for recording has to be defined. The term "qualified" means that the recorded time period TP represents all patterns of collaboration of the micro services which also could happen in the future time period for the planned update of the micro services. The collaboration mode which comprises dependencies among the micro services is defined by sequences S of micro service activities.

Statistics of the activities of all individual micro services MS_1, MS_2, MS_3, etc. will be generated,
- the time intervals of all activities: all identified lengths A_1, A_2,..., A_n, e.g. minimum, maximum lengths, etc.
but also all identified time intervals/slots of without activities, means inactivity gaps I_1, I_2, ...I_n, e.g. minimum, maximum lengths, etc.

Based on this analysis overall gaps (that means: all micro services are in-active at the same time) are identified: all time periods for gaps G_1, G_2, .... G_n, including maximum, median, and minimum are identified and counted for the overall recording time period.

The chronological order of the micro services MS_1, MS_2, MS_3, etc. until MS_x is identified in the start phase and after periods of in-activities for all micro services (gaps): which micro service starts first, then second, then third etc.

The chronological order is also identified backwards in the closing phase and before periods of overall in-activities (gaps): which micro service is the last one, the second last one, etc.

A sequence S(t s(MS 1), t_e(MS_1), t_s(MS_2), t_e(MS_2), t_s(MS_3), t_e(MS_3), etc.) is the activity pattern of orchestrated micro services to solve a joint technical application. The sequence sorts the active micro services MS for given start times t_s and end times t_e per micro service. It is defined:
t_s < t_e for all individual micro services;
t_s (MS_1) <= t_s(MS_2) <= t_s(MS_3) etc. and t e(MS_1) <= t_e(MS_2) <= t_e(MS_3) etc.

All activities of the micro services with the time period TP are split into several sequences S. A sequence is initiated by an MS_1 activity. The sequence S can contain one or several activities of the following MS_2, MS_3, etc. between the start time t_s and end time t_e per micro service.

Once the sequences of the micro services have been identified, the time distances TD_12s = t_s(MS_2) - t s(MS_1), TD_23s = t_s(MS_3) - t_s(MS_2), etc. between the start of the first micro service and the start of the second one, between the second and third one etc. are identified for all sequences S. In the same way the time distances between the end times are identified: TD_12e = t_e(MS_2) - t_e(MS_1), TD_23e = t_e(MS_3) - t_e(MS_2), etc.

If the end time t_e of the last micro service of the sequence S(i) is smaller than the start time of the next sequence S(i+1) than there is an overlap of the sequences S(i) and S(i+1).

Gaps G comprising of inactivities of all micro services at the same time serve as separation between sequences S. In case of overlaps of two sequences the inactivity gaps I per micro service serve as separation: An inactivity I of micro service MS_1 after t_e(MS_1) is followed by another inactivity I of MS_2 after t_e(MS_2), another inactivity I of MS_3 after t_e (MS_3) and so on. Such a sequence of inactivity gaps SIG of all micro services serves as separation between the (overlapping) sequences S of collaboration.

The identification respectively separation of sequences requires the description of many constraints and the usage of iterative optimization methods.

A standard method of solving is the application of solvers for Constraint programming (CP) (https://en.wikipedia.org/wiki/Constraint programming) and/or Mixed-Integer Programming is a optimization method in which some or all of the variables are restricted to be integers. In many settings the term refers to integer linear programming (ILP), in which the objective function and the constraints (other than the integer constraints) are linear. If some decision variables are not discrete the problem is known as a mixed-integer programming problem (https://en.wikipedia.org/wiki/Integer programming ). For such optimization tasks there are commercial (e.g. Gurobi, CPLEX), non-commercial (e.g. SCIP) and proprietary (e.g. Supreme and moaas) solvers. The problem statement in a mathematical format is sufficient to start such solvers and to get the sequences S followed by sequences with inactivity gaps SIG for a given time period TP listed.

Ad 2: For the gap analysis the update times UT_1 , UT_2, UT_3 etc. for all micro services MS_1, MS_2, MS_3 etc. are given.

The simple case: If the update times UT_1, UT_2, etc. are smaller than gaps G_j > max (UT1, UT2, UT3 etc.), then only the start of those gaps G_j have to be identified for the update.

Gaps G_i which are too short for an overall update and gaps G_j which are long enough for an update etc. are classified. Then only the starting point of the next gap has to be taken from the future time series.

In case of overlapping sequences S followed by overlapping inactivity sequences SIG: if the update times UT_1, UT_2, UT_3, etc. fit into all inactivity gaps I of the corresponding micro services of the SIG (sequence of inactivity gaps), then the updates could be carried out in given sequence. It is distinguished between SIG_j > ((I(MS 1) > UT1) AND (I(MS_2) > UT2)) AND (I(MS_3) > UT3)) etc.) and SIG_i for which the gaps are too small.

Ad 3: A forecasting method is selected to derive criteria for updates of micro services in the future from identified opportunities for updates in the past.

Guiding question: Is the time period TP long enough to represent all variants of sequences S followed by sequences of inactivity gaps (SIG)? A similarity analysis based on case-based reasoning (CBR) analysis or clustering (based on clustering methods such as K-MEANS, DBSCAN, etc.) is carried out. CBR is the process of solving new problems based on the solutions of similar past problems (https://en.wikipedia.org/wiki/Case-based_reasoning).

If the sequences S followed by SIG have appeared more than once and the number of variants is much smaller than the overall amount of sequences, there are some repeating patterns which could be used for forecasts.

Next guiding question: what is the necessary time horizon to start the update? Since the sequences S_j and SIG_j somehow could overlap, the initiation of the update after the sequence S_j might be too late but the SIG_j has already started before S_j has finalized. Some patterns in the time series have to be identified which always happen before the SIG_j.

A neural network for time series prediction is applied to identify patterns in time series before the SIG_j (sequences of inactivity gaps with sufficient gaps for updates) will appear. Applicable architectures for such neural networks are deep learning frameworks, e.g. Tensorflow for feedforward networks (see https://en.wikipedia.org/wiki/TensorFlow) or recurrent neural networks, e.g. implemented in SENN (see https://www.witpress.com/Secure/elibrary/papers/DATA00/DATA00 054FU.pdf) .

Training of neural network: The patterns of the SIG_j are considered as target information yt. The other patterns are the input patterns x for the neural network. The objective is to minimize the difference between target information yt and model output y. The weights of the neural network are optimized in a way the objective function gets close to zero. A typical training approach is to split the data of time period TP into a training set and a validation set. The neural network model is built on the training data. Then it is applied for validation on the validation data.

Application of neural network for the update of micro services in the automation process:
The neural network defined by the network architecture and the weights is applied in parallel to the operation of the micro services for the automation process. It gets the current time series data in real-time. The model calculates the output y with time stamps (t_current + x) in near future in real-time. The time stamps in the future determine the forecast time horizont for process states of the micro service which is suitable for updates. If the output y provides a value which indicates a SIG_j in near future, then a computer-implemented system, which may use the API of container orchestration framework, or person in charge for updates knows that an update of micro service could be carried out for this time slot.

Finally, the control of the current version of the micro service within the current automation process is disabled at this time slot and the control of the deployed update version of the micro service is enabled.

The invention has been described in detail with reference to embodiments thereof and examples. Variations and modifications are possible. Instead of the above described production process one or more processes can analogously applied to AGVs (autonomous guides vehicles), where one vehicle transports work pieces from one place to another place where the work pieces are processed in different process stages.

It is also conceivable that the invention is analogously used in the context of an energy system like micro grids where the energy load balance needs to be controlled by steering the energy suppliers and the energy consumers at the right time.

The system can be (computer-)implemented for performing the inventive method steps.

The system can be integrated into a (computer) cloud. It includes one or more processors and can be coupled with a data, where said processor(s) is/are configured to execute the method steps.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the system and/or computer and/or another processor may be configured to implement the acts described herein.

The above-described method may be implemented via a computer program (product) including one or more computer-readable storage media having stored thereon instructions executable by one or more processors of a computing system and/or computing engine. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

In addition, and alternatively, it is possible that a control device receives other computer-readable control signals in order to initiate the mentioned steering/control process by its processor(s).

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative.

## Claims

1. Computer-implemented method for upgrading and/or updating at least one service of a plurality of services performed on a computer-implemented system (T), wherein the plurality of services implements a joint technical application in said system,
wherein the computer-implemented method is configured to:
a. deploy at least one update version (Vx) of the at least one service which needs to be updated or be upgraded on the system while maintaining the current version of the service on the system, wherein the update version of the at least one service is prevented from controlling specific parts of the joint technical application;
b. deploy and operate a monitoring module (A2K) for protocolling communications (IN) among the plurality of services and for analysing dependencies among applications of said services with respect to their running times wherein such dependencies are derived from data resulting from the protocolled communications, wherein the protocolled communications contain the time when the services communicates to other components of the system and wherein dependencies among all applications of the services result in chronologically ordered sequences of service activities sorted by the protocolled time, whereby the services activities are separated from each other by one or more sequences of inactivities of all services;
c. determine, by using machine learning, process states (PSt) of each at least one service which are suitable for updating and/or upgrading said service by complying with criteria inferred from said dependencies to identify suitable time slots for updating and/or upgrading the at least one service, wherein a suitable time slot means that all services are inactive at the same time, whereby training data for the machine learning can be split into training data set to build a neural network for the machine learning and labelled for dividing them into a first data set representing process states of the services suitable for updating and/or upgrading and into a second data set representing process states of the services not suitable for updating and/or upgrading and into validation data set to verify output data of the build neural network model when the machine learning is applied in parallel to the application of the services;
d. disable the control (Ctr) of the current version of the service within the current technical application at a time slot of said identified time slots; and
e. enable the control (Ctr) of the deployed update version of the service within the current technical application.

2. Method according to the preceding claim, wherein the protocolled communication is recorded as time series data for all services during a pre-definable time period.

3. Method according to any of the preceding claims, wherein data concerning said communications are captured from a specific input and/or output service (SC I/O) managing communications among said services that implement the said joint technical application.

4. Method according to any of the preceding claims, wherein the criteria are complied if a first service activity of the the plurality of services starts after and/or a last service the plurality of services starts before a suitable time slots in which the process states of all of the services are suitable for updating and/or upgrading.

5. System for upgrading and/or updating at least one service of a plurality of services performed on the system (T), wherein the plurality of services implements a joint technical application and each service is configured to control a specific part of the joint technical application, whereby the system is coupled to and/or comprises one or more processors which is or are configured to:
a. deploy at least one update version (Vx) of the at least one service which needs to be updated or be upgraded on the system while maintaining the current version of the service on the system, wherein the update version of the at least one service is prevented from controlling specific parts of the joint technical application;
b. deploy and operate a monitoring module (A2K) for protocolling communications (IN) among the plurality of services and for analysing dependencies among applications of said services with respect to their running times wherein such dependencies are derived from data resulting from the protocolled communications, wherein the protocolled communications contain the time when the services communicates to other components of the system and wherein dependencies among all applications of the services result in chronologically ordered sequences of service activities sorted by the protocolled time, whereby the services activities are separated from each other by one or more sequences of inactivities of all services;
c. determine, by machine learning, process states (PSt) of each at least one service which are suitable for updating and/or upgrading said service by complying with criteria inferred from said dependencies to identify suitable time slots for updating and/or upgrading the at least one service, wherein a suitable time slot means that all services are inactive at the same time, whereby training data for the machine learning can be split into training data set to build a neural network for the machine learning and labelled for dividing them into a first data set representing process states of the services suitable for updating and/or upgrading and into a second data set representing process states of the services not suitable for updating and/or upgrading and into validation data set to verify output data of the build neural network model when the machine learning is applied in parallel to the application of the services;
d. disable the control (Ctr) of the current version of the service within the current technical application at a time slot of said identified time slots; and
e. enable the control (Ctr) of the deployed update version of the service within the current technical application.

6. Computer program product which is being executed by one or more processors of a computer or of the system according to the preceding claim in order to execute a method according to any of the preceding method claims.

## Patentansprüche

1. Computerimplementiertes Verfahren zum Erweitern und/oder Aktualisieren mindestens eines Dienstes aus einer Vielzahl von Diensten, die auf einem computerimplementierten System (T) ausgeführt werden, wobei die Vielzahl von Diensten eine gemeinsame technische Anwendung in besagtem System implementiert,
wobei das computerimplementierte Verfahren konfiguriert ist zum:
a. Einsetzen mindestens einer Update-Version (Vx) des mindestens einen Dienstes, der aktualisiert oder erweitert werden muss, auf dem System, während die aktuelle Version des Dienstes auf dem System beibehalten wird, wobei die Update-Version des mindestens einen Dienstes daran gehindert wird, spezifische Teile der gemeinsamen technischen Anwendung zu steuern;
b. Einsetzen und Betreiben eines Überwachungsmoduls (A2K) zum Protokollieren von Kommunikationen (IN) zwischen der Vielzahl von Diensten und zum Analysieren von Abhängigkeiten zwischen Anwendungen besagter Dienste in Bezug auf ihre Laufzeiten, wobei solche Abhängigkeiten aus Daten abgeleitet werden, die aus den protokollierten Kommunikationen resultieren, wobei die protokollierten Kommunikationen die Zeit enthalten, zu der die Dienste mit anderen Komponenten des Systems kommunizieren, und wobei Abhängigkeiten zwischen allen Anwendungen der Dienste in chronologisch geordneten Sequenzen von Dienstaktivitäten resultieren, die nach der protokollierten Zeit sortiert sind, wodurch die Dienstaktivitäten durch eine oder mehrere Sequenzen von Inaktivitäten aller Dienste voneinander getrennt sind;
c. Bestimmen, unter Verwendung von maschinellem Lernen, von Prozesszuständen (PSt) jedes mindestens einen Dienstes, die zum Aktualisieren und/oder Erweitern besagten Dienstes geeignet sind, durch Erfüllen von Kriterien, die aus besagten Abhängigkeiten abgeleitet werden, um geeignete Zeitfenster zum Aktualisieren und/oder Erweitern des mindestens einen Dienstes zu identifizieren, wobei ein geeignetes Zeitfenster bedeutet, dass alle Dienste zur gleichen Zeit inaktiv sind, wodurch Trainingsdaten für das maschinelle Lernen in einen Trainingsdatensatz zum Aufbau eines neuronalen Netzwerks für das maschinelle Lernen aufgeteilt und gekennzeichnet werden können, um sie in einen ersten Datensatz, der für das Aktualisieren und/oder Erweitern geeignete Prozesszustände der Dienste repräsentiert, und in einen zweiten Datensatz, der für das Aktualisieren und/oder Erweitern nicht geeignete Prozesszustände der Dienste repräsentiert, und in einen Validierungsdatensatz zum Verifizieren von Ausgabedaten des aufgebauten neuronalen Netzwerkmodells, wenn das maschinelle Lernen parallel zur Anwendung der Dienste angewendet wird, zu unterteilen;
d. Deaktivieren der Steuerung (Ctr) der aktuellen Version des Dienstes innerhalb der aktuellen technischen Anwendung in einem Zeitfenster der besagten identifizierten Zeitfenster; und
e. Aktivieren der Steuerung (Ctr) der eingesetzten Update-Version des Dienstes innerhalb der aktuellen technischen Anwendung.

2. Verfahren nach dem vorhergehenden Anspruch, wobei die protokollierte Kommunikation als Zeitreihendaten für alle Dienste während eines vordefinierbaren Zeitraums aufgezeichnet wird.

3. Verfahren nach einem der vorhergehenden Ansprüche, wobei Daten bezüglich besagter Kommunikationen von einem spezifischen Eingabe- und/oder Ausgabedienst (SC I/O) erfasst werden, der Kommunikationen zwischen besagten Diensten verwaltet, die die besagte gemeinsame technische Anwendung implementieren.

4. Verfahren nach einem der vorhergehenden Ansprüche, wobei die Kriterien erfüllt sind, wenn eine erste Dienstaktivität der Vielzahl von Diensten nach beginnt und/oder ein letzter Dienst der Vielzahl von Diensten vor einem geeigneten Zeitfenster beginnt, in dem die Prozesszustände aller Dienste zum Aktualisieren und/oder Erweitern geeignet sind.

5. System zum Erweitern und/oder Aktualisieren mindestens eines Dienstes aus einer Vielzahl von Diensten, die auf dem System (T) ausgeführt werden, wobei die Vielzahl von Diensten eine gemeinsame technische Anwendung implementiert und jeder Dienst konfiguriert ist, einen spezifischen Teil der gemeinsamen technischen Anwendung zu steuern, wodurch das System mit einem oder mehreren Prozessoren gekoppelt ist und/oder diese umfasst, der oder die konfiguriert ist oder sind zum:
a. Einsetzen mindestens einer Update-Version (Vx) des mindestens einen Dienstes, der aktualisiert oder erweitert werden muss, auf dem System, während die aktuelle Version des Dienstes auf dem System beibehalten wird, wobei die Update-Version des mindestens einen Dienstes daran gehindert wird, spezifische Teile der gemeinsamen technischen Anwendung zu steuern;
b. Einsetzen und Betreiben eines Überwachungsmoduls (A2K) zum Protokollieren von Kommunikationen (IN) zwischen der Vielzahl von Diensten und zum Analysieren von Abhängigkeiten zwischen Anwendungen besagter Dienste in Bezug auf ihre Laufzeiten, wobei solche Abhängigkeiten aus Daten abgeleitet werden, die aus den protokollierten Kommunikationen resultieren, wobei die protokollierten Kommunikationen die Zeit enthalten, zu der die Dienste mit anderen Komponenten des Systems kommunizieren, und wobei Abhängigkeiten zwischen allen Anwendungen der Dienste in chronologisch geordneten Sequenzen von Dienstaktivitäten resultieren, die nach der protokollierten Zeit sortiert sind, wodurch die Dienstaktivitäten durch eine oder mehrere Sequenzen von Inaktivitäten aller Dienste voneinander getrennt sind;
c. Bestimmen, durch maschinelles Lernen, von Prozesszuständen (PSt) jedes mindestens einen Dienstes, die zum Aktualisieren und/oder Erweitern besagten Dienstes geeignet sind, durch Erfüllen von Kriterien, die aus besagten Abhängigkeiten abgeleitet werden, um geeignete Zeitfenster zum Aktualisieren und/oder Erweitern des mindestens einen Dienstes zu identifizieren, wobei ein geeignetes Zeitfenster bedeutet, dass alle Dienste zur gleichen Zeit inaktiv sind, wodurch Trainingsdaten für das maschinelle Lernen in einen Trainingsdatensatz zum Aufbau eines neuronalen Netzwerks für das maschinelle Lernen aufgeteilt und gekennzeichnet werden können, um sie in einen ersten Datensatz, der für das Aktualisieren und/oder Erweitern geeignete Prozesszustände der Dienste repräsentiert, und in einen zweiten Datensatz, der für das Aktualisieren und/oder Erweitern nicht geeignete Prozesszustände der Dienste repräsentiert, und in einen Validierungsdatensatz zum Verifizieren von Ausgabedaten des aufgebauten neuronalen Netzwerkmodells, wenn das maschinelle Lernen parallel zur Anwendung der Dienste angewendet wird, zu unterteilen;
d. Deaktivieren der Steuerung (Ctr) der aktuellen Version des Dienstes innerhalb der aktuellen technischen Anwendung in einem Zeitfenster der besagten identifizierten Zeitfenster; und
e. Aktivieren der Steuerung (Ctr) der eingesetzten Update-Version des Dienstes innerhalb der aktuellen technischen Anwendung.

6. Computerprogrammprodukt, das von einem oder mehreren Prozessoren eines Computers oder des Systems nach dem vorhergehenden Anspruch ausgeführt wird, um ein Verfahren nach einem der vorhergehenden Verfahrensansprüche auszuführen.

## Revendications

1. Procédé mis en œuvre par ordinateur pour mettre à niveau et/ou mettre à jour au moins un service d'une pluralité de services effectués sur un système mis en œuvre par ordinateur (T), dans lequel la pluralité de services met en œuvre une application technique commune dans ledit système,
dans lequel le procédé mis en œuvre par ordinateur est configuré pour :
a. déployer au moins une version de mise à jour (Vx) de l'au moins un service qui doit être mis à jour ou mis à niveau sur le système tout en maintenant la version actuelle du service sur le système, dans lequel la version de mise à jour de l'au moins un service est empêchée de commander des parties spécifiques de l'application technique commune ;
b. déployer et faire fonctionner un module de surveillance (A2K) pour protocoliser des communications (IN) entre la pluralité de services et pour analyser des dépendances entre des applications desdits services par rapport à leurs temps d'exécution, dans lequel de telles dépendances sont tirées de données résultant des communications protocolisées, dans lequel les communications protocolisées contiennent l'instant auquel les services communiquent avec d'autres composants du système et dans lequel des dépendances entre toutes les applications des services conduisent à des séquences ordonnées chronologiquement d'activités de service triées par l'instant protocolisé, moyennant quoi les activités de service sont séparées les unes des autres par une ou plusieurs séquence(s) d'inactivités de tous les services ;
c. déterminer, à l'aide d'apprentissage automatique, des états de processus (PSt) de chaque au moins un service qui sont appropriés pour mettre à jour et/ou mettre à niveau ledit service en respectant des critères déduits desdites dépendances pour identifier des créneaux temporels appropriés pour mettre à jour et/ou mettre à niveau l'au moins un service, dans lequel un créneau temporel approprié signifie que tous les services sont inactifs en même temps, moyennant quoi des données d'apprentissage pour l'apprentissage automatique peuvent être réparties en un ensemble de données d'apprentissage pour construire un réseau de neurones pour l'apprentissage automatique et marquées pour les diviser en un premier ensemble de données représentant des états de processus des services appropriés pour la mise à jour et/ou la mise à niveau et en un deuxième ensemble de données représentant des états de processus des services non appropriés pour la mise à jour et/ou la mise à niveau, et en un ensemble de données de validation pour vérifier des données de sortie du modèle de réseau de neurones construit lorsque l'apprentissage automatique est appliqué en parallèle à l'application des services ;
d. désactiver la commande (Ctr) de la version actuelle du service dans l'application technique actuelle dans un créneau temporel parmi lesdits créneaux temporels identifiés ; et
e. activer la commande (Ctr) de la version de mise à jour déployée du service dans l'application technique actuelle.

2. Procédé selon la revendication précédente, dans lequel la communication protocolisée est enregistrée sous la forme de séries de données chronologiques pour tous les services pendant une période de temps pouvant être prédéfinie.

3. Procédé selon l'une des revendications précédentes, dans lequel des données concernant lesdites communications sont capturées à partir d'un service d'entrée et/ou de sortie spécifique (SC I/O) gérant des communications entre lesdits services qui mettent en œuvre ladite application technique commune.

4. Procédé selon l'une des revendications précédentes, dans lequel les critères sont respectés si une première activité de service de la pluralité de services commence après et/ou un dernier service de la pluralité de services commence avant un créneau temporel approprié dans lequel les états de processus de tous les services sont appropriés pour la mise à jour et/ou la mise à niveau.

5. Système de mise à niveau et/ou de mise à jour d'au moins un service d'une pluralité de services effectués sur le système (T), dans lequel la pluralité de services met en œuvre une application technique commune et chaque service est configuré pour commander une partie spécifique de l'application technique commune,
moyennant quoi le système est couplé à et/ou comprend un ou plusieurs processeur(s) qui est ou sont configuré(s) pour :
a. déployer au moins une version de mise à jour (Vx) de l'au moins un service qui doit être mis à jour ou mis à niveau sur le système tout en maintenant la version actuelle du service sur le système, dans lequel la version de mise à jour de l'au moins un service est empêchée de commander des parties spécifiques de l'application technique commune ;
b. déployer et faire fonctionner un module de surveillance (A2K) pour protocoliser des communications (IN) entre la pluralité de services et pour analyser des dépendances entre des applications desdits services par rapport à leurs temps d'exécution, dans lequel de telles dépendances sont tirées de données résultant des communications protocolisées, dans lequel les communications protocolisées contiennent l'instant auquel les services communiquent avec d'autres composants du système et dans lequel des dépendances entre toutes les applications des services conduisent à des séquences ordonnées chronologiquement d'activités de service triées par l'instant protocolisé, moyennant quoi les activités de service sont séparées les unes des autres par une ou plusieurs séquence(s) d'inactivités de tous les services ;
c. déterminer, à l'aide d'apprentissage automatique, des états de processus (PSt) de chaque au moins un service qui sont appropriés pour mettre à jour et/ou mettre à niveau ledit service en respectant des critères déduits desdites dépendances pour identifier des créneaux temporels appropriés pour mettre à jour et/ou mettre à niveau l'au moins un service, dans lequel un créneau temporel approprié signifie que tous les services sont inactifs en même temps, moyennant quoi des données d'apprentissage pour l'apprentissage automatique peuvent être réparties en un ensemble de données d'apprentissage pour construire un réseau de neurones pour l'apprentissage automatique et marquées pour les diviser en un premier ensemble de données représentant des états de processus des services appropriés pour la mise à jour et/ou la mise à niveau et en un deuxième ensemble de données représentant des états de processus des services non appropriés pour la mise à jour et/ou la mise à niveau, et en un ensemble de données de validation pour vérifier des données de sortie du modèle de réseau de neurones construit lorsque l'apprentissage automatique est appliqué en parallèle à l'application des services ;
d. désactiver la commande (Ctr) de la version actuelle du service dans l'application technique actuelle dans un créneau temporel parmi lesdits créneaux temporels identifiés ; et
e. activer la commande (Ctr) de la version de mise à jour déployée du service dans l'application technique actuelle.

6. Produit de programme informatique qui est exécuté par un ou plusieurs processeur(s) d'un ordinateur ou du système selon la revendication précédente afin d'exécuter un procédé selon l'une des revendications de procédé précédentes.
